# EUROPEAN PATENT SPECIFICATION

(11) **EP 3 512 701 B1**
(45) Date of publication and mention of the grant of the patent: **19.11.2025**
(21) Application number: 17768758.9
(22) Date of filing: 14.09.2017
(51) Int. Cl.: D21J 3/00, B29C 63/02, B32B 1/00, B32B 3/26, B32B 7/06, B32B 27/08, B32B 27/10, B32B 27/32, B32B 27/34, B32B 27/36, B32B 29/00, B32B 29/08, B29C 51/16

(54) **PROCESS FOR PRODUCING A MOLDED PULP TRAY**
HERSTELLUNGSVERFAHREN EINER GEFORMTEN SCHALE AUS ZELLSTOFF
PROCÉDÉ DE FABRICATION D'UNE BARQUETTE MOULÉE EN PULPE

(30) Priority: 14.09.2016 EP 16382428
(43) Date of publication of application: 24.07.2019
(73) Proprietor: Packbenefit S.L., 28001 Madrid (ES)
(72) Inventor: ESGUEVA GUTIERREZ, Francisco, 47162 Valladolid (ES); PELAYO MELENDEZ, Ramiro, 47162 Valladolid (ES)
(74) Representative: Hoffmann Eitle
(86) International application number: PCT/EP2017/073213
(87) International publication number: WO 2018/050788

(56) References cited:
- WO-A1-01/74564
- WO-A1-2009/014483
- CN-A- 1 307 154
- ES-T3- 2 539 936
- US-A1- 2009 265 875
- US-A1- 2014 110 072

## Description

### Field of the invention

The present invention refers to the field of biodegradable trays, in particular to biodegradable food trays, more particularly to a three dimensional molded shape suitable for use in the fabrication of a food tray, the molded shape comprising a molded pulp portion with side walls and a bottom wall comprising virgin or recycled cellulose fibers and a film laminate portion comprising a polyester film with an amorphous polyester heat seal layer.

### Background of the invention

WO 01/74564 A and CN 1 307 154 A disclose processes for producing molded pulp trays.

The following discussion of the background of the invention is merely provided to aid the reader in understanding the invention, and is not admitted to describe or constitute prior art to the present invention.

The bulk of the trays currently in use for the packaging of raw or partially prepared foods, such as cuts of meat, sausages and meat patties, are formed from polystyrene or from inexpensive wood pulps which are surface treated with various grease-resistant compounds. Such trays have numerous disadvantages. In the case of polystyrene trays, they are neither fully biodegradable nor are they capable of being incinerated without producing toxic waste. While biodegradable, trays formed from wood pulp lack sufficient grease proof-ness, particularly where a relatively long shelf life is required, and in addition they often contain undesirable toxic contaminants, such as dioxins, which have become of increasing concern because of their carcinogenic properties.

In addition, the biodegradable food trays currently in use for the packaging of raw or partially or completely prepared foods usually comprise pulp and a barrier such as:
- Addition of barrier chemicals in the wet end such as AKD, ASA and PFOA/PFOS-free, non-telomer based fluorochemical agents;
- Liquid coatings and other surface treatments;
- Mist Coating;
- Dip coating and Flush coating; and
- Polymer film lining

While efforts have been made to improve existing wood pulp trays by adding some of the above barriers, none of the food trays currently in use which are both readily of fully biodegradable and at the same time provide effective grease and water proof-ness over an extended period of time are capable of i) being heated up to temperatures used in conventional kitchen ovens, without altering their physical structures and thus their function as a food tray; ii) can resist the bending of the tray and return to their originally shape due to their flexibility and strength; and iii) provide an extended shelf life for fruits and vegetables.

There is thus still a need to provide a tray readily biodegradable that at the same time provides grease and water protection and overcomes the above mentioned disadvantages of the trays currently in use.

### Brief description of the invention

The present invention solves the above mentioned technical problems by providing a process for producing a three dimensional molded shape according to claim 1. Disclosed is also a biodegradable three dimensional molded shape suitable for use in the fabrication of a food tray, the molded shape comprising a molded pulp portion with side walls and a bottom wall comprising virgin or recycled cellulose fibers and optionally a film laminate portion comprising a polyester film with an amorphous polyester heat seal layer.

In particular, this disclosure refers to a biodegradable three dimensional molded shape suitable for use in the fabrication of a food tray, the molded shape comprising a molded pulp portion with side walls and a bottom wall comprising virgin or recycled cellulose fibers and a binding substance, such as alkyl ketene dimer (a hydrogenated fatty acid derivative which can be of animal or plant origin) in a proportion between 0 and 1%, preferably between 0.2 and 1% of the dry pulp, wherein the total number of additives or components other than water or cellulose, including the binding substances, in the three dimensional molded shape does not exceed a proportion greater than 1% of the dry pulp.

It is preferred that the molded pulp portion is between about 0.2 mm and 1.5 mm thick in planar areas and preferably about twice that thickness in non-planar areas or curved regions.

A second aspect of the disclosure refers to the three dimensional molded shape of the first aspect of the invention, which further comprises a poly film laminate portion comprising a polyester film, preferably a biaxially orientated polyester film, with an amorphouspolyester heat seal layer.

Preferably, the laminate is between about 0.02 and 0.2 mm thick and applied by heat press atop of the molded pulp portion without glue between the molded pulp portion and the laminate.

It is preferred that the laminate of the three dimensional molded shape is applied by using a temperature between 140 and 250° Celsius, preferably between 140° and 200°C, for a time of 5 to 60 second and a negative pressure, preferably by using vacuum.

It is preferred that the film laminate is at least partially recyclable, at least partially degradable, and constructed of at least 50% recycled raw material.

The molded pulp portion is obtained or obtainable by subjecting wet cellulose fibres to heat and pressure, and according to the invention by subjecting wet cellulose fibres to a temperature between 120° to 180° and a pressure between 1.5 and 3 bars.

The three dimensional molded shape may further comprise an overwrap film thereabout or, an optionally heat-sealed film covering the upper open option of the three dimensional molded shape (not necessarily overwrapped).

The process for producing the three dimensional molded shape according to the invention is explained and illustrated in the detailed description of the invention.

In particular, the process for producing the three dimensional molded shape, comprises the following steps:
a. obtaining a pulp comprising virgin or recycled cellulose fibers;
b. Wetting the cellulose fibers of step a) so to form a suspension of wet cellulose fibers, preferably having at least 96% of water and less than 4% of cellulose fibers;
c. adding a binding substance, preferably alkyl ketene dimer (a hydrogenated fatty acid derivative which can be of animal or plant origin) in a proportion between 0.2 and 1% of the dry pulp;
d. Pouring the preparation of cellulose with water of step c) into a container in a forming machine (the forming box), where it is absorbed by the molds preferably by means of vacuum pressure;
e. Moving the container (the forming box) so that it is positioned facing a second body with molds of opposite shape having a contact surface temperature between 120°C and 180°C and with the cellulose adhered to the first container (the forming box), which already has a tray shape, and moving said forming box to said second box, so that both boxes are bolted down until they exert a pressure between 1.5 and 3 bars in the cellulose found between the molds of opposite shape;
f. Optionally repeating step d) until the molded cellulose tray is dry and has a moisture of less than 10%, preferably less than 9%, more preferably les than 8%, more preferably less than 7%, still more preferably about 6%;
g. Obtaining the finish trays.

More particularly, the process for producing the three dimensional molded shape, comprises the following steps:
a. obtaining a pulp comprising virgin or recycled cellulose fibers;
b. Wetting the cellulose fibers of step a) so to form a suspension of wet cellulose fibers, preferably having at least 96% of water and less than 4% of cellulose fibers;
c. adding a binding substance, preferably alkyl ketene dimer (a hydrogenated fatty acid derivative which can be of animal or plant origin) in a proportion between 0.2 and 1% of the dry pulp;
d. Pouring the preparation of cellulose with water of step c) into a container in a forming machine (the forming box), where it is absorbed by the molds by means of vacuum pressure;
e. Moving the container (the forming box) so that it is positioned facing a second body with molds of opposite shape having a contact surface temperature between 120°C and 180°C and with the cellulose adhered to the first container (the forming box), which already has a tray shape, and moving said forming box to said second box, so that both boxes are bolted down until they exert a a pressure between 1.5 and 3 bars in the cellulose found between the molds of opposite shape;
f. Separating the forming box from the second box and after the two boxes are separated, allowing the second box to come in contact again with the second box or with a third box, so that both boxes are again bolted down so that they can exert similar pressures at similar temperatures as in the first press (see step e)), and optionally repeat this process until the molded cellulose tray is dry and has a moisture of less than 10%, preferably less than 9%, more preferably les than 8%, more preferably less than 7%, still more preferably about 6%;
g. Obtaining the finish trays.

This disclosure also refers to a three dimensional molded shape suitable for use in the fabrication of a food tray, obtained or obtainable by the process of the third aspect of the invention or any of its related embodiments.

Another aspect the present disclosure refers to a three dimensional molded shape for use in the packaging of food products or for carrying organic materials such as food products or for containing any food product composition while it is heating up to temperatures used in conventional kitchen ovens.

Additional application will be well understood by the skilled person in the art such for carrying paints or any other type of organic or inorganic material.

### Brief description of the figures

The accompanying figures, which are incorporated in and constitute a part of this specification, illustrate several embodiments and together with the description illustrate the disclosed compositions and methods.
**Fig 1** shows a molded pulp with a film laminate in accordance with a preferred embodiment of the present invention.
**Figs 2** to **4** respresent a schematic representation of the formation of the tridimensional pulp mold.
**Fig 5** illustrates a tray before a fixture is pressed down.
**Fig 6** illustrates a tray when the fixture is pressed down.
**Fig 7** illustrates a tray when the fixture has returned.
**Fig 8** is a diagram showing the strength of plastic trays, red and green, and OWP tray, blue.

### Detailed description of the invention

Unless expressly specified otherwise, the term "comprising" is used in the context of the present document to indicate that further members may optionally be present in addition to the members of the list introduced by "comprising". It is, however, contemplated as a specific embodiment of the present invention that the term "comprising" encompasses the possibility of no further members being present, i.e. for the purpose of this embodiment "comprising" is to be understood as having the meaning of "consisting of".

### Definitions

In the context of the present invention, the term "biodegradable" is understood as the characteristic of a product that is capable of being disintegrated by biological agents such as the sun, water, plants or animals.

In the context of the present invention, the term "partially biodegradable" is understood as the characteristic of a product that is formed by the combination of biodegradable and of non-biodegradable materials.

In the context of the present invention, the term "pulp" is a lignocellulosic fibrous material prepared by chemically or mechanically separating cellulose fibers from wood, fiber crops or waste paper.

In the context of the present invention, the term "polyester" is a long chain of synthetic polymers that have ester linkages. Polyester materials are used as fibers, plastics, and films. In the context of the present invention, the term "film laminate" refers to film made by lamination, which is the technique of manufacturing a material in multiple layers, so that the composite material achieves improved strength, stability, sound insulation, appearance or other properties from the use of differing materials.

In the context of the present invention, the term "wet cellulose fibres" refers to a product formed by more than 96% of water and less than 4% of cellulose fibers, preferably more than 97% of water and less than 3% of cellulose fibers, more preferably more than 98% of water and less than 2% of cellulose fibers, still more preferably more than 99% of water and less than 1% of cellulose fibers, approximately more than 99.5% of water and less than 0.5% of cellulose fibers. In the context of the present invention, the term "overwrap film" refers to a film that surrounds or involves a specific object, in this case the described tray.

In the context of the present invention, the term "recycle" refers to the process of converting waste materials into reusable objects to prevent waste of potentially useful materials, reduce the consumption of fresh raw materials, energy usage, air pollution (from incineration) and water pollution (from landfilling) by decreasing the need for "conventional" waste disposal and lowering greenhouse gas emissions compared to plastic production.

### Description

The present disclosure provides a disposable food tray that combines the biodegradability of molded pulp and that at the same time provides effective grease and water proof-ness over an extended period of time and is capable of i) being heated up to temperatures used in conventional kitchen ovens, without altering its physical structures and thus its function as a food tray; ii) can resist the bending of the tray and return to its originally shape due to their flexibility and strength; and iii) provide an extended shelf life for fruits and vegetables.

Certain types of films are at least partially degradable. These include, preferably biaxially orientated, polyester films, polyethylene teraphthalate (PET), polypropylene (PP), polyethylene (PE) or bio film like polylactic acid (PLA). PLA is 100% biodegradable. Others may be partly biodegradable. For example, PE may come as low-density polyethylene (LDPE) or high-density polyethylene (HDPE), and may be made more biodegradable by adding starch during the production process. In one example, PE film laminate with these additives has been found to be approximately 40% biodegradable and to have heat forming qualities (softening between 300 and 400 degrees) and elongation. Nylon may also be suitable as a film material in certain situations. All of these films can be used to implement the present invention.

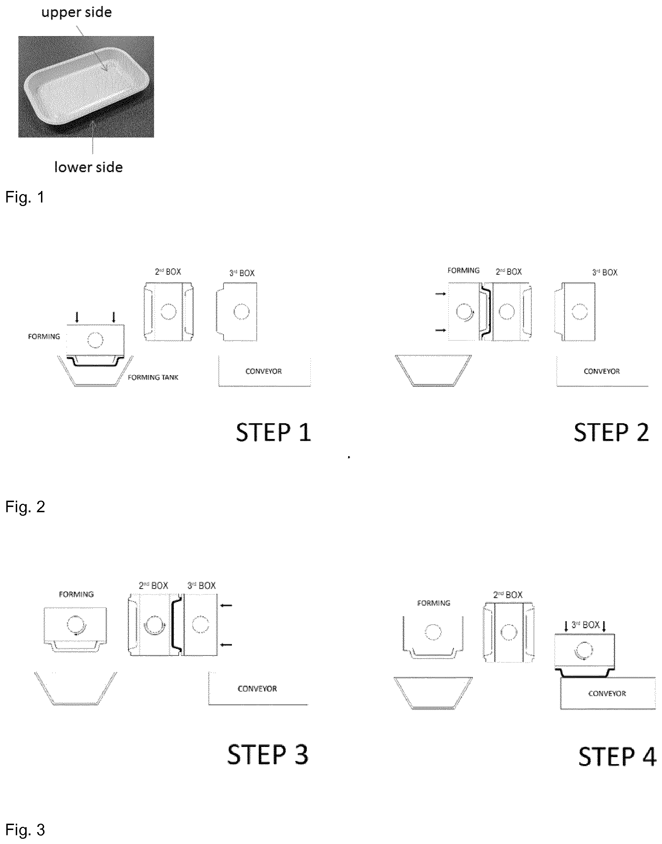

Referring to FIG. 1, a food tray is disclosed constructed of virgin or recycled molded pulp and comprising a first (upper) side where the film is deposited and a second (lower) side. Preferably the pulp has the parametric characteristics described in the table below, preferably it is the ChemiThermoMechanical Pulp manufactured by Rottneros (www.rottneros.com).

**Table 1. Parametric characteristics of the pulp.**

| Property | Unit | **CS770** | **CS775** | **CS870** | **CS970** | **CS980** | **CS065** |
|---|---|---|---|---|---|---|---|
| Freeness | ml | 320 | 350 | 400 | 500 | 500 | 630 |
| Drainage resistance | °SR | 38 | 36 | 32 | 25 | 25 | 19 |
| Brightness, ISO | % | 70 | 75 | 70 | 70 | 78 | 65 |
| Light scattering coeff. | m²/kg | 37 | 36 | 35 | 33 | 32 | 32 |
| Opacity | % | 80 | 79 | 79 | 77 | 75 | 81 |
| Density | kg/m³ | 360 | 360 | 350 | 340 | 360 | 310 |
| Bulk | cm³/g | 2,8 | 2,8 | 2,9 | 2,9 | 2,8 | 3,2 |
| Tensile Index | kNm/kg | 26 | 26 | 24 | 22 | 25 | 22 |
| Tear Index | Nm²/kg | 7,4 | 7,4 | 7,3 | 7,2 | 7,5 | 7 |
| Shive content, Sommerville | % | 0,05 | 0,05 | 0,06 | 0,07 | 0,07 | 0,1 |

It is noted that the pulp can be molded in dimensions which may vary somewhat in size and shape while still performing the desired functions (as a tray for i.e packaging of vegetables and fruits).

Briefly, the pulp is molded to a preferable thickness of between 0.2 mm and 1.5 mm in planar areas and preferably about twice that thickness in non-planar areas or curved regions, depending on the structural requirements throughout the tray. For instance, the thickness can be adjusted to accommodate both the flat portions of the tray and any curved portion of the tray.

The pulp tray is then laminated only on the first side (upper side) with film laminate, preferably from biodegradable or partially biodegradable material, to a preferred thickness of between 0.02 and 0.2 mm. This lamination may be accomplished as explained later on in the present specification. The thin film coating makes the upper side substantially impermeable to moisture or grease, so the tray can be used to hold its content without losing its rigidity or deteriorating from water contact or from contact with grease. But the lower side is still able to absorb moisture and start the normal degradation process. So when the user is finished, he can discard the tray, and the pulp will begin to biodegrade from the bottom side. Within a short time, the molded pulp body, which constitutes the greatest bulk of the mass and volume of the tray, will have biodegraded, leaving only the very thin, non-rigid film. The residual film laminate will constitute only a minuscule fraction of the waste left by a disposable tray.

The resultant benefit of a tray composed almost solely of molded pulp fiber is twofold. One, the immediate benefit comes at the time of purchase in that the bulk of the product has already been manufactured from recycled post-consumer waste bio-products. This in itself is a major contribution to the environment in that each purchase is one less purchase of a non-biodegradable plastic tray deemed to last forever.

The second benefit arrives when the product is discarded. Unlike plastic trays composed of 100% non-biodegradable plastic, the molded pulp fibers, which compose the bulk of the tray content, immediately begin their decomposing process, leaving only a very thin film laminate, inconsequential in substance.

It is important to highlight the fact that the aimed of the authors of the present invention was thus the development of molded fiber packagings optionally having a thin biodegradable plastic layer. This packaging should be easily disposed of along with organic waste, and thus should be fully degradable. Furthermore, it should improve the characteristics of current trays produced from injected plastic such as PP or thermoformed plastic such as PET or EPS, which are harmful to the environment. Moreover, such packaging should result in an improvement of the characteristics of similar trays currently produced from cellulose.

Such characteristics should include:
1. Rigidity
2. Elasticity
3. Density
4. Less than 1% anti-moisture additives
5. Microwaves
6. Can be used in an oven
7. Protective atmosphere
8. Biodegradable within 3 months
9. Renewable
10. Recyclable
11. For food use

In order to achieved each of these characteristics, a key aspect with respect to other types of molded fiber pieces lies in the production process explained herein below both in terms of tray formation and lamination.

### Forming process

### General process description

Virgin tree fiber is used for the production of trays, thus maintaining a high percentage of lignin and of the rest of the wood substances.

This cellulose is introduced in solid packets into a pulper chamber so that it can be broken up in an aqueous solution by means of a rotor which cuts it up at a high speed in the water.

Once this process ends, it is stored in a storage chamber without any other type of additive, only water and cellulose. Once the cellulose preparation with water reaches the chamber of the forming machine, it is diluted by 50% and a binding substance, i.e., alkyl ketene dimer (a hydrogenated fatty acid derivative which can be of animal or plant origin) is added in a proportion between 0.2 and 1% of the dry pulp. This percentage which is exceptionally low in the industry can be used because the present molding system confers unique characteristics to the product and does not require higher concentrations, unlike other production systems where amounts of additives greatly exceeding 1% are required.

### Forming machine

The machine used to produce the trays of the present invention is illustrated in figures 2 and 3, and proceeds in four steps as explained below:
STEP 1
   - A preparation of cellulose with water is poured into a container in the forming machine itself, where it is absorbed by the molds by means of a strong vacuum pressure. Since the molds are covered by a mesh acting like a strainer, cellulose which adheres to the said mesh is separated from water.
STEP 2
   - Once the forming box has collected the water with pulp from the container and said water has been separated from the cellulose by means of the mesh filter, it is quickly turned so that it is positioned facing the second body with molds of opposite shape having a contact surface temperature between 120°C and 180°C.

With the cellulose adhered to the mesh of the forming box mold, which already has a tray shape but with a moisture of 70%, said forming box is moved close to the second box, both boxes are bolted down by means of four bolts so that they can withstand the strong pressure exerted by four cylinders without moving, until the cellulose found between molds of opposite shape is able to withstand a pressure between 1.5 and 3 bar.

In other words, the molds are hot and exert a great pressure, which is a significant difference with respect to what is being used today in the industry.

A few seconds later, the cylinders stop exerting pressure, the bolts are removed, releasing the boxes. Before separating both boxes, the trays are transferred from the forming box to the second box, then the two boxes are immediately separated, allowing the second box to rotate about its axis, turning the molds to the position in which they will come into the molds of the third box.

### STEP 3

Immediately after the turning of the second box, the third box is moved close to the second box, and both boxes are likewise bolted down with four bolts so that four other cylinders can exert similar pressures at similar temperatures as in the first press, until the molded cellulose tray is practically dry and has a moisture of about 6%.

### STEP 4

Once the trays are dry, the four cylinders also stop exerting pressure, the four bolts are removed, the second and third boxes are separated and the finished trays are taken out by means of a handler who places the trays in a conveyor line carrying them to the laminating area.

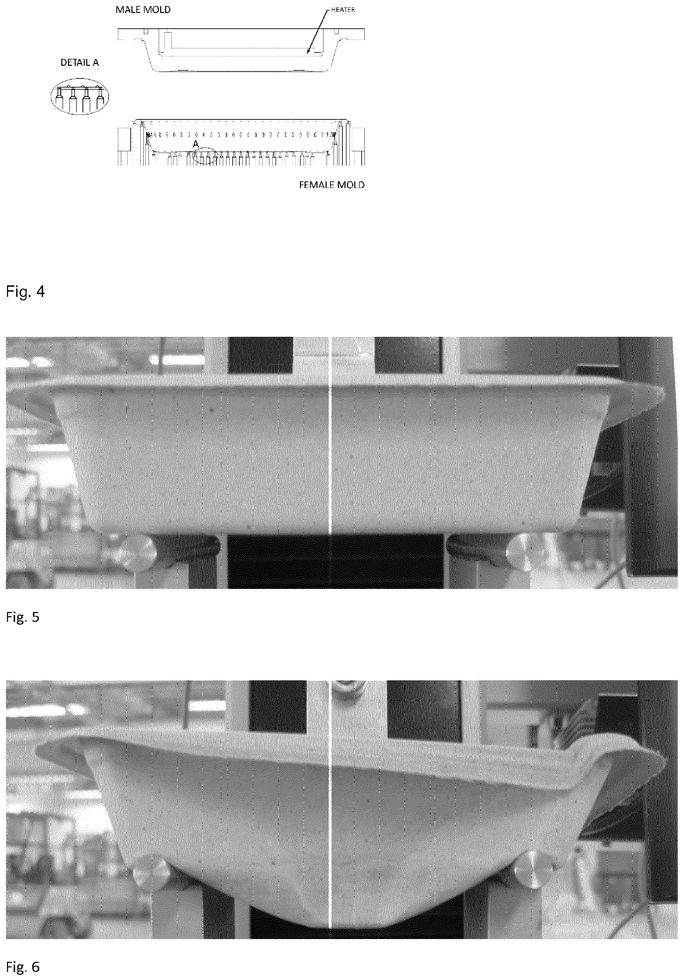

The forming process described above is different from any other process as detailed below:
B. **First, the cellulose is pressed and heated immediately** after its absorption and separation from a large fraction of water. The advantage consists of the remaining moisture being extracted in both directions of the molds, initially in the form of water, as a result of the drip caused by the pressure, but in the form of steam immediately after, where the process starts at a very low temperature due to the strong vacuum pressure (between 100 mbar and 400 mbar).
C. A second press is performed immediately after in which drying of the trays is completed with the same vacuum pressure, inter-mold pressure (between 1.5 and 3 bar) and temperatures (between 120°C and 180°C on the contact surface) (see figure 4).

### Molds

As a result of using such high pressures and temperatures (inter-mold pressure (between 1.5 and 3 bar) and temperatures (between 120°C and 180°C on the contact surface), specific **molds** were developed to prevent steam extraction from occurring in an abrupt manner and from being able to break any bonds that are being formed between cellulose fibers while moisture is being extracted (referred to herein as ***efficient steam venting management***)***.*** These molds are placed in the machine in all the phases except in the initial one where there is arranged a non-heated mold with a mesh).

The molds must have the following characteristics in order to fulfill the above requirements:
1. **Both** (female and male, or concave-convex) **molds have a smooth surface** instead of a mesh or other solutions with rough surfaces. This allows better and more efficient transmission of temperature to thereby reach the steam extraction temperature in the shortest possible time.
2. They have **several holes** which allow steam extraction as close as possible to the point where it is generated. Said holes **become larger right behind the contact surface** to slow down the steam venting speed, preventing the Venturi effect which would speed up steam venting, achieving a more moderate and natural steam extraction.
3. The **resistances heating up the molds are arranged inside** same so that the moisture extraction temperature is reached as soon as possible and with the smallest dissipation loss possible. This is particularly important in the male or convex mold and on the sides of the female or concave molds, given that the distance to the base of the mold, i.e., to the hot surface, is greater and therefore the delay in heating is more pronounced.

The above described forming process, comprises the following characteristics:
- Pressing performed from the very beginning
- Rapid heating at low temperatures by means of resistances
- Steam extraction at low temperatures by means of vacuum
- Progressive and moderate steam extraction

Such characteristic provides for following technical effects:
- The bonds formed in the trays are very strong due to the progressive moisture extraction by maintaining the pressure. This allows achieving an exceptional **rigidity,** with a **very light mass.**
- In addition, such bonds are in no way damaged by moderate steam venting. In this sense, the rigidity characteristics in the entire molded cellulose are kept.
- Furthermore, once formed and consolidated, said bonds between cellulose molecules stretch, since the fibers tend to shrink and to cluster together strongly as moisture is lost, but the pressure and the shape of the mold prevents this from happening thereby allowing the structure of the tray to remain stressed. This generates an **elasticity** that far exceeds any other tray.

The trays thus obtained are fully degradable, having less than 1% anti-moisture additives and provide for excellent disposable food trays that combine the biodegradability of molded pulp and that at the same time provides effective grease and water proof-ness over an extended period of time and is capable of i) being heated up to temperatures used in conventional kitchen ovens, without altering its physical structures and thus its function as a food tray; ii) can resist the bending of the tray and return to its originally shape due to their flexibility and strength; and iii) provide an extended shelf life for fruits and vegetables.

In addition, the trays of the present invention can be optionally laminated as explained below.

### Laminating process

### General process description

This process consists of introducing the group of cardboard trays from the forming machine into a group of molds in which the trays fit. Said cavities have pores or are perforated to allow the passage of air there through.

The plastic sheet passes below resistances that give off heat or infrared lamps, and above the cardboard trays that have been introduced in the mold.

Said sheet is heated as close as possible to the softening temperature so that it is ready for thermoforming over the cardboard trays.

Thermoforming takes place by means of a strong vacuum pressure generated through the holes of the cavities of the molds, which also goes through the cardboard pores, strongly attracting the plastic laminate to the trays. Since the sheet is close to its softening temperature, it stretches and adapts to the shape of the tray or the mold, and furthermore at that temperature point, it adheres to the surface of the cardboard, aided by the vacuum pressure.

The trays are taken out of the cavities a moment after by means of a light blowing, so that the assembly, i.e., the plastic band with adhered cardboard trays, moves forward a couple of steps to the die-cutting point.

By means of die-cutting, the cardboard tray with thermoformed plastic is separated from the plastic skeleton which constitutes the generated remnant.

The already laminated cardboard trays are taken out of the machine by means of conveyors or ejectors and the remnant is wound to the end of the line.

Once laminated, the trays are ready for use.

In connection to the lamination process, the film is preferably provided in a thickness of 0.02 to 0.2 mm. It will typically be heated in the lamination machine, then using a die press (such as by applying negative pressure), it is heat pressed into the molded product. The heat press (negative pressure included) may typically be heated from 150° C to 200° C. for 5 to 60 seconds. Stretching the film prior to molding may help provide coverage in the peaks and valleys of the molded form.

The current process allows the film laminate to be easily removed from the molded pulp fiber tray to recycle (along with any food content). This may be accomplished by using a suitable film, such as those set forth as detailed above or preferably as those specifically mentioned at the end of the description below.

With the proper heat bonding and without glue, the tray or other container has a laminate adheres sufficiently to the molded pulp to avoid falling out in normal handling or under the influence of gravity. But because no glue is used, with the use of the proper poly film and heat sealing as set forth above, one can easily remove the film from the finished tray, as by the edges along the flange.

While a paper tray has been discussed and disclosed, Applicant's novel product and method may also be used on other industrial residential products, including: trim tray, drip catcher, mud tray, paint tray, kitty litter tray, flower pot and oil tray, for any use implying heating up the tray and its content to temperatures commonly used in kitchen ovens. Any of these may be produced with a molded pulp thickness of 1 to 2 mm, and optionally a laminate thickness of 0.02 mm to 0.2 mm.

A typical product's content will be composed of at least 95%, preferably 96, 97, 98, and more preferably 99% biodegradable recycled pulp fiber used in the manufacture of the molded article, having less than 1% anti-moisture additives. A film laminate would typically represent 5% or less by weight. Particular preferred laminates to practice the present invention are the so called Mylar products. In particular, Mylar, also known as BoPET (Biaxially-oriented polyethylene terephthalate) is a polyester film made from stretched polyethylene terephthalate (PET) and is used for its high tensile strength, chemical and dimensional stability, transparency, reflectivity, gas and aroma barrier properties, and electrical insulation. The structural formulae associated to these types of Mylar products is as follows 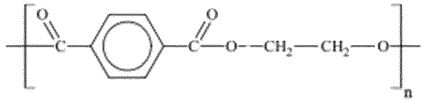 Chemical structure of polyethylene terephthalate

The laminar film could thus preferably comprise a PET surface such as the one described above and another surface of, for example, a co/extruded amorphous PET that has heat sealability and print adhesion so that it can be heated to seal to itself and to different other substrates, such as APET/CPET trays and APET coated boards, PVdC, PVC, paper and aluminum foils. In addition such laminar (poly) film could be preferably recycled into polyester fibers or be burned in an incinerator with normal refuse or could be buried as a relatively inert material in a landfill. It should as well be capable of withstanding temperatures between 180 and 240°C (such as those used in conventional oven and microwave). An example of such laminar film would be Mylar 850, (www.gepack.fr). Another example would be the 100% biodegradable film known as Naturflex 30NK, which could be acquired at Futamura.

All of the above mentioned films should preferably be approved to be in contact with food according to the European legislation and/or the FDA.

The above described laminating process, comprises the following characteristics:
D. One of the characteristics differentiating the present laminating process from other existing solutions for the plastic production by thermoforming lies on the care taken in preferably using **biodegradable plastics** produced based on organic substances, taking into account that **plastics of 40 and 50 microns** are used in the present process, whereas the plastics commonly used by tray manufactures are of 90 to 300 microns, depending on whether they laminate or directly produce thermoformed plastic trays.
E. **The key of the process lies in the heating system** which is used to soften the plastic before thermoforming. Tungsten lamps emitting an IR radiation are preferably used. The wavelength of said lamps is changed according to the instantaneous power applied.
F. This possibility of instantaneously changing the heating power applied to the plastic **allows perfectly controlling the softening moment,** the thermoforming moment and the moment in which the plastic is required to adhere strongly to the cellulose tray once it is thermoformed over said tray. The next action consists of cooling same in order to remove it from the molds without deforming the plastic.
G. This way of managing heating power applied to the plastic in the laminating process in vital for compostable plastics of this type that do not have any resistant plastic layer or adhesive plastic layer.
H. Lamination is usually performed using radiation resistances with a very high thermal inertia, so it is impossible to adjust the heating power any time during lamination. This is why very thick, complex plastics that withstand those temperatures at all times are required.

*In brief, the process of laminating cellulose trays molded with compostable plastics provides the following technical effects:*
- This method allows producing cellulose trays coated with very thin plastics, made with renewable organic materials. These trays are recycled after use as they compost together with the organic waste of the food being packed.
- These trays produced with this heating system have **suitable plastic-cellulose adhesion.** Furthermore, since care is taken as regards stretching of the plastic during thermoforming, the formation of perforations in the parts that experience greater elongation due to excessive temperature and stretching is prevented.

Although the invention has been described in connection with the preferred embodiment, it is not intended to limit the invention's particular form set forth, but on the contrary, it is intended to cover such alterations, modifications, and equivalences that may be included in the scope of the invention as defined by the appended claims.

### EXAMPLES

### Example 1. Elaboration of the pulp product.

### The pulp product can be obtained according to the folowing description:

### FORMING PROCESS

The use of intense heat and pressure during the manufacturing procedure of the trays of he invention allows for the provision of trays having the characteristics specified through-out the detailed description of hte invention. Such use of intense heat and pressure is only made possible thanks to the designed of specific molds that provide a path for the resultant steam to escape.

Such use of intense heat and pressure facilitates the bonding and tensioning of fibres while they are trapped between the tools, the success being a product with a memory factor, increased strength, less weight, more dense and exact repeatability, something not found in comparative processes.

In this sense, the authors oft he present invention have interestingly found that when wet fibres are subjected to high heat and pressure, individual fibres will improved their bonding to each other at the points of contact. In this regard, in order to achieved such improved binding characteristics pressure and heat should be initially applied to the wet fibres. In this sense, exerting pressure on the fibres to reach the forces necessary for producing strong fibre bonding is relatively easy, however, the problem arises when, apart from exerting pressure, high heat is also applied, because then any water remaining in the product will most probably inmediately boil and evaporate. This, of course, creates steam which expands at a violent rate, over 1.700 times by volume. Such expanding steam must find an escape path, since, if not, then the only escape path will be through the fibre network thus breaking the tray and the bonds created. In other words in such conditions, the product shall "explode" between the moulds.

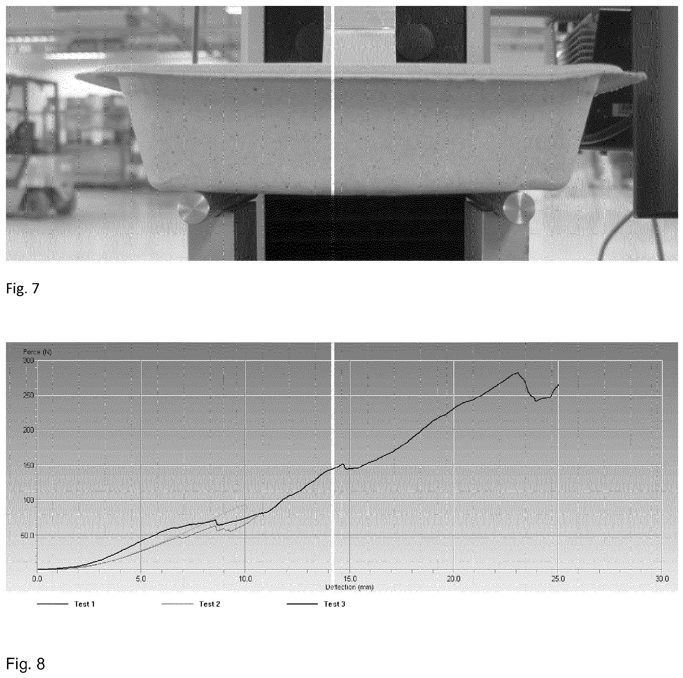

The moulds illustrated in the detailed description of the invention, provide an escape path to the steam produced during the production process illustrated in the detailed description of the invention. By using these tools, high heat and pressure can be initially applied to the wet fibres without fearing product explosions. In addition, being able to use high heat and pressure results in the production of trays forms strong bonds due to the progressive moisture extraction by maintaining the pressure. This allows achieving an exceptional **rigidity,** with a **very light mass.** In addition, such bonds are in no way damaged by moderate steam venting. In this sense, the rigidity characteristics in the entire molded cellulose are kept. Furthermore, once formed and consolidated, said bonds between cellulose molecules stretch, since the fibers tend to shrink and to cluster together strongly as moisture is lost, but the pressure and the shape of the mold prevents this from happening thereby allowing the structure of the tray to remain stressed. This generates an **elasticity** that far exceeds any other tray. Such characteristics are partly illustrated in figures 5 to 7, wherein it is clearly shown how the products maintain their rigidity after deformation. In addition, as illustrated in figure 8 and table 1 below, the trays of the invention show greater strength that plastic trays.

**Table 1. Strength of the tested products. 1kg = N x 0,981**

| Sample Code | Force @ Peak (N) | Deflection @ Peak (mm) | Bending Strength @ Peak (N/mm²) |
|---|---|---|---|
| Test 1, PETE | 83.4 | 10.8 | 355 |
| Test 2, PP | 93.6 | 10.0 | 279 |
| Test 3, OWP | 282 | 23.0 | 841 |

As previously mentioned, fibres shrink on drying. However, when these same fibres are trapped between two very hot tools, they cannot shrink because of the pressure exerted upon them. As a result of this, the fibres stretched. Such streched increases the strength of the fibres considerably and provides for a memory. Meaning that on bending or buckling it will afterwards revert to its original shape. Most other moulded board products when bent, remain bent. So this "spring back" memory effect has huge implications for a product that will be used many times in its normal life cycle. The reason for this memory in the product is because of the fact that the fibres are held in tension. Such effects permit, among other things, to avoid the use of binding additives, thus providing a fully biodegradable product since such additives are usually not easily biodegradable.

All these advanced features of the trays bring about two essential characteristics:
1. A very low thickness of about 0,6-0.7 mm; and
2. The need of very low quantities of additives to improve the mechanical performance of the product in extreme conditions of humidity .

## Claims

1. A process for producing a three-dimensional molded shape suitable for use in the fabrication of a food tray, the process comprising the following steps:
a. obtaining a pulp comprising virgin or recycled cellulose fibers;
b. Wetting the cellulose fibers of step a) so to form a suspension of wet cellulose fibers;
c. adding a binding substance, preferably an alkyl ketene dimer, in a proportion between 0.2 and 1% of the dry pulp;
d. Pouring the preparation of cellulose with water of step c) into a container in a forming machine, where it is absorbed by molds preferably by means of vacuum pressure;
e. Moving the container so that it is positioned facing a second body with molds of opposite shape having a contact surface temperature between 120°C and 180°C and with the cellulose adhered to the container, which already has a tray shape, and moving said container to said second body, so that both are bolted down until they exert a pressure between 1.5 and 3 bars in the cellulose found between the molds of opposite shape, wherein both molds have several holes which allow steam extraction in a progressive manner as both boxes are bolted down until they exert a pressure between 1.5 and 3 bars in the cellulose found between the molds of opposite shape;
f. Optionally repeating step e) until the molded cellulose tray is dry and has a moisture of less than 7%; and
g. Obtaining the finish trays;
wherein the molds are **characterized by**:
1. having a smooth surface;
2. having several holes which become larger right behind the contact surface to slow down the steam venting speed, preventing the Venturi effect which would speed up steam venting, achieving a more moderate and natural steam extraction; and
3. having resistances heating up the molds arranged inside same.

2. The process of claim 1, which further comprises applying a film laminate to the finish trays, by a heated press at a temperature between 140 and 200° Celsius for a time of 5 to 60 seconds, wherein the film laminate comprises a film with a heat seal layer.

3. The process according to any of claims 1 or 2, wherein the suspension of wet cellulose fibers of step b) has at least 96% of water and less than 4% of cellulose fibers.

4. The process according to any of claims 1 to 3, wherein the preparation of cellulose with water of step c) is pour, in accordance with step d), into a container in a forming machine where it is absorbed by the molds by means of vacuum pressure.

## Patentansprüche

1. Herstellungsverfahren einer dreidimensionalen geformten Formgebung geeignet für deren Verwendung bei der Fertigung einer Lebensmittelschale, wobei das Verfahren die folgenden Schritte umfasst:
a. das Erhalten eines Zellstoffs umfassend Primär- oder recycelte Cellulosefasern;
b. das Befeuchten der Cellulosefasern aus Schritt a), um eine Suspension von feuchten Cellulosefasern zu bilden;
c. das Hinzufügen einer bindenden Substanz, vorzugsweise eines Alkylketendimers, in einem Anteil zwischen 0,2 und 1 % des trockenen Zellstoffs;
d. das Gießen der Zubereitung aus Cellulose mit Wasser aus Schritt c) in einen Behälter in einer Formmaschine, in welcher sie von den Formen vorzugsweise mittels Vakuumdrucks absorbiert wird;
e. das Bewegen des Behälters, sodass er einem zweiten Körper zugewandt mit Formen entgegengesetzter Formgebung positioniert wird, aufweisend eine Kontaktflächentemperatur zwischen 120 °C und 180 °C und mit der Cellulose am ersten Behälter angehaftet, welcher bereits eine Schalenformgebung aufweist, und das Bewegen des genannten Behälters zum zweiten Körper hin, sodass beide verschraubt werden, bis sie einen Druck zwischen 1,5 und 3 Bars in der Cellulose, welche sich zwischen den Formen entgegengesetzter Formgebung befindet, ausüben, wobei beide Formen mehrere Löcher aufweisen, welche progressiv die Dampfentnahme erlauben, da beide Kästen verschraubt werden, bis sie einen Druck zwischen 1,5 und 3 Bars in der Cellulose, welche sich zwischen den Formen entgegengesetzter Formgebung befindet, ausüben;
f. wahlweise das Wiederholen des Schritts e), bis die geformte Celluloseschale trocken ist und eine Feuchtigkeit von weniger als 7 % aufweist; und
g. das Erhalten der fertigen Schalen;
wobei die Formen **dadurch gekennzeichnet sind, dass** sie:
1. eine glatte Oberfläche aufweisen;
2. mehrere Löcher aufweisen, welche direkt hinter der Kontaktoberfläche größer werden, um die Dampfentlüftungsgeschwindigkeit zu verlangsamen, sodass der Venturi-Effekt verhindert wird, welcher die Dampfentlüftung beschleunigen würde, unter Erzielung einer weiteren mäßigen und natürlichen Dampfentnahme; und
3. Widerstände aufweisen, welche die Formen, welche darin angeordnet sind, aufwärmen.

2. Verfahren nach Anspruch 1, welches zusätzlich das Auftragen eines Filmlaminats auf die fertigen Schalen, mittels einer geheizten Presse bei einer Temperatur zwischen 140 und 200° Celsius während einer Zeit von 5 bis 60 Sekunden, umfasst, wobei das Filmlaminat einen Film mit einer heißgesiegelten Schicht umfasst.

3. Verfahren nach einem der Ansprüche 1 oder 2, wobei die Suspension von feuchten Cellulosefasern aus Schritt b) mindestens 96 % Wasser und weniger als 4 % Cellulosefasern aufweist.

4. Verfahren nach einem der Ansprüche 1 bis 3, wobei die Zubereitung aus Cellulose mit Wasser aus Schritt c), gemäß Schritt d), in einen Behälter in einer Formmaschine gegossen wird, in welcher sie von den Formen mittels Vakuumdruck absorbiert wird.

## Revendications

1. Procédé de fabrication d'une forme moulée en trois dimensions appropriée pour son utilisation dans la fabrication d'une barquette alimentaire, le procédé comprenant les étapes suivantes :
a. obtenir d'une pulpe comprenant des fibres de cellulose vierges ou recyclées ;
b. mouiller les fibres de cellulose de l'étape a) pour former une suspension de fibres de cellulose mouillées ;
c. ajouter une substance liante, de préférence un dimère d'alkyl-cétène, dans une proportion comprise entre 0.2 et 1 % de la pulpe sèche ;
d. verser la préparation de cellulose avec de l'eau de l'étape c) dans un récipient dans une machine de formage, où elle est absorbée par des moules de préférence au moyen d'une pression sous vide ;
e. déplacer le récipient de sorte qu'il soit positionné faisant face à un deuxième corps avec des moules de forme opposée ayant une température de surface de contact comprise entre 120 °C et 180 °C et avec la cellulose adhérée au récipient, qui présente déjà une forme de barquette, et déplacer ledit récipient vers ledit deuxième corps, de sorte que tous les deux sont boulonnés jusqu'à exercer une pression comprise entre 1,5 et 3 bar dans la cellulose se trouvant entre les moules de forme opposée, dans lequel les deux moules présentent plusieurs trous qui permettent l'extraction de vapeur d'une manière progressive au fur et à mesure que les deux boîtes sont boulonnées jusqu'à exercer une pression comprise entre 1,5 et 3 bar dans la cellulose se trouvant entre les moules de forme opposée ;
f. optionnellement répéter l'étape e) jusqu'à ce que la barquette de cellulose moulée soit sèche et présente une humidité inférieure à 7 % ; et
g. obtenir les barquettes terminées ;
dans lequel les moules sont **caractérisés en ce qu'**ils :
1. présentent une surface lisse ;
2. présentent plusieurs trous qui deviennent plus grands juste après la surface de contact pour ralentir la vitesse d'évacuation de la vapeur, empêchant l'effet Venturi qui accélérerait l'évacuation de la vapeur, obtenant une extraction de vapeur plus modérée et naturelle ; et
3. présentent des résistances chauffant les moules disposées à l'intérieur de ceux-ci.

2. Procédé selon la revendication 1, qui comprend en outre l'application d'une structure laminée en film sur les barquettes terminées, par une presse chauffée à une température comprise entre 140 et 200 ° Celsius pendant un temps compris entre 5 et 60 secondes, dans lequel la structure laminée en film comprend un film avec une couche de thermoscellage.

3. Procédé selon l'une quelconque des revendications 1 ou 2, dans lequel la suspension de fibres de cellulose mouillées de l'étape b) présente au moins 96 % d'eau et moins de 4 % de fibres de cellulose.

4. Procédé selon l'une quelconque des revendications 1 à 3, dans lequel la préparation de cellulose avec de l'eau de l'étape e) est versée, selon l'étape d), dans un récipient dans une machine de formage où elle est absorbée par les moules au moyen d'une pression sous vide.
